# EUROPÄISCHE PATENTSCHRIFT

(11) **EP 0 848 309 B1**
(45) Veröffentlichungstag und Bekanntmachung des Hinweises auf die Patenterteilung: **29.08.2001**
(21) Anmeldenummer: 97121077.8
(22) Anmeldetag: 01.12.1997
(51) Int. Cl.: G05B 19/4062

(54) **Vorrichtung zur Überwachung und Begrenzung der statischen Schliesskraft einer Tür**
Device for monitoring and limiting the static closing force of a door
Dispositif de surveillance et limitation de la force de fermeture statique d'une porte

(30) Priorität: 12.12.1996 DE 29621617 U
(43) Veröffentlichungstag der Anmeldung: 17.06.1998
(73) Patentinhaber: SIEMENS AKTIENGESELLSCHAFT, 80333 München (DE)
(72) Erfinder: Sonntag, Guido, Dipl. Ing., 30989 Gehrden (DE); Ludwig, Heinz, Dipl. Ing., 30823 Garbsen (DE)

(56) Entgegenhaltungen:
- EP-A- 0 462 539
- EP-A- 0 714 052
- EP-B- 0 429 835
- WO-A-95/08859
- WO-A-95/30265
- WO-A-97/26694
- DE-A- 3 634 731

## Beschreibung

Die Erfindung bezieht sich auf eine Vorrichtung zur Überwachung und Begrenzung der statischen Schließkraft einer längsgeführt hin und her bewegbaren Schiebetür nach dem Oberbegriff des Patentanspruchs 1.

Bei derartigen Schiebetüren kann es sich beispielsweise um Schiebetüren einer Aufzuganlage, Schotte od.dgl. handeln.

Aus der EP-A-0 462 539 ist eine Steuer- und Überwachungseinheit für einen im Maschinenbau zum Einsatz kommenden Servomotor beschrieben. Die Funktion des Servomotors wird überwacht, indem der für den Betrieb des Servomotors vorgegebene Istwert, im in der genannten Druckschrift beschriebenen Ausführungsbeispiel die Position, mit dem an den Servomotor angelegten Steuersignal bzw. Sollwert verglichen wird. Sofern der Istwert dem Steuersignal bzw. dem Sollwert nicht folgt, wird in der Steuer- und Überwachungsvorrichtung festgestellt, dass ein Fehler vorliegt.

Die DE 36 34 731 A1 zeigt eine Steuereinrichtung für eine Antriebsanlage, bei der zur Begrenzung oder Unterbrechung des der Antriebsvorrichtung mit mindestens einem Elektromotor zugeführten Stromes beim Erreichen oder Überschreiten eines oberen Stromgrenzwerts eine den Istwert des Stromes repräsentierende Größe mit einer den oberen Stromgrenzwert repräsentierenden Größe verglichen wird. Sobald die Istwertgröße die Grenzwertgröße erreicht oder überschreitet, erfolgt ein Auslösen eines den Strom beeinflussenden Schaltvorgangs. Hierbei wird die Grenzwertgröße jeweils aktuell ermittelt, und zwar unter Zugrundelegung der Istwertgröße des Stromes und Hinzufügung einer vorgebbaren Abstandsgröße. Die Grenzwertgröße entspricht somit der Summe aus der aktuellen Istwertgröße und der hinzugefügten Abstandsgröße, womit die Grenzwertgröße sich aktuell jeweils an die Istwertgröße anpasst. Die zulässige Änderung bzw. Änderungsgeschwindigkeit der so bestimmten Grenzwertgröße wird zumindest in einer Richtung geringer gehalten als die entsprechende Änderung bzw. Änderungsgeschwindigkeit der Istwertgröße.

Die WO 9508859 A zeigt eine Antriebsanlage für eine automatische Tür, z.B. für eine Rolltür od.dgl. Zur Antriebsanlage gehört ein Elektromotor, der zur Bewegung der Tür in ihre Offen- oder in ihre Schließstellung betätigbar ist. Mittels eines Stromüberwachers wird der Motorstrom überwacht. Sobald der Motorstrom einen vorgebbaren Grenzwert übersteigt, sei es, weil die Tür ihre Offen- oder Schließstellung erreicht hat, oder weil der Türbewegung ein Hindernis entgegensteht, sendet der Stromüberwacher ein entsprechendes Signal an eine Steuereinrichtung, die daraufhin den Elektromotor abschaltet. Des weiteren gehört zu der Antriebsanlage bzw. zu deren Steuereinrichtung eine Zeitschaltung, die den Elektromotor nach Ablauf eines fest vorgegebenen Zeitintervalls nach einer Inbetriebsetzung grundsätzlich abschaltet, wenn er nicht vorher aufgrund eines Signals des Stromüberwachers abgeschaltet worden ist.

Aus der WO 9530265 A ist eine Vorrichtung zur Überwachung und Begrenzung der statischen Schließkraft einer längsgeführt hin und her bewegbaren Schiebetür bekannt. Zu dieser Vorrichtung bzw. zur Antriebsanlage der Schiebetür gehört ein Elektromotor, mittels dem die zur Bewegung der Schiebetür erforderliche mechanische Energie erzeugbar ist. Der Betrieb des Elektromotors wird mittels einer Steuereinrichtung gesteuert, mittels der die vom Elektromotor erzeugte mechanische Energie regelbar ist und ein zur Energieerzeugung des Elektromotors proportionaler Parameter erfasst werden kann. Vor jeder Fahrt der Schiebetür wird eine Überprüfung der Antriebsanlage der Schiebetür vorgenommen. Diese Überprüfung wird realisiert, indem während einer Anfangsphase jeder Fahrt der Schiebetür die Antriebsanlage daraufhin getestet wird, wie hoch die maximale statische Schließkraft der Schiebetür ist. Hierbei liegt der maximale Motorstrom, der als zur statischen Schließkraft der Schiebetür bzw. zur Energieerzeugung des Elektromotors der Antriebsanlage proportionaler Parameter fungiert, oberhalb des maximal zulässigen Motorstroms, wobei jedoch die von der Schiebetür während dieses Zeitraums zurückgelegte Wegstrecke vernachlässigbar klein ist. Wenn es innerhalb eines vorgebbaren Zeitraums möglich ist, den Motorstrom in der gewünschten Weise abzusenken, wird eine positive Testmeldung an die Steuervorrichtung der Antriebsanlage abgegeben; ist die Antriebsanlage nicht in der Lage, innerhalb des vorgebbaren Zeitraums den Motorstrom innerhalb der vorgegebenen Grenzen zu halten, wird eine negative Testmeldung an die Steuervorrichtung abgegeben.

Ausgehend von dem vorstehend geschilderten Stand der Technik liegt der Erfindung die Aufgabe zugrunde, eine Vorrichtung zur Überwachung und Begrenzung der statischen Schließkraft einer längsgeführt hin und her bewegbaren Schiebetür zu schaffen, bei der ohne Eingriffe von außen und ohne Erhöhung eines für die statische Schließkraft der Schiebetür ursächlichen Parameters über einen maximal zulässigen Grenzwert hinaus selbsttätig eine Überprüfung dahingehend durchführbar ist, ob der für die maximal zulässige statische Schließkraft gesetzte Grenzwert stets den aktuellen tatsächlichen Verhältnissen entspricht. Diese Aufgabe wird erfindungsgemäß durch die im kennzeichnenden Teil des Patentanspruchs 1 angegebenen Merkmale gelöst. Der zur Energieerzeugung des Elektromotors proportionale Parameter unterschreitet bzw. überschreitet den zweiten mittels dem Mikrocontrollersystem vorgegebenen Grenzwert während des einen bestimmten Zeitintervalls nach oben und unterschreitet diesen Grenzwert während des anderen bestimmten Zeitintervalls in abwärtiger Richtung. Die im Mikrocontrollersystem erfassten Parameterwerte während dieser bei-. den Zeitintervalle werden mit im Mikrocontrollersystem abgespeicherten Sollwerten für diesen Parameter verglichen; sobald die erfassten und die abgespeicherten Parameterwerte miteinander übereinstimmen, kann die Antriebsanlage der Schiebetür weiter betrieben werden. Hierdurch wird eine quasi doppelte Überwachung der maximal zulässigen statischen Schließkraft der längsgeführt hin und her bewegbaren Masse inklusive einer internen Überwachung der Vorrichtung zur Verfügung gestellt.

Zweckmäßigerweise ist durch das Mikrocontrollersystem eine Blockiererkennung auslösbar, wenn der zur Energieerzeugung des Antriebsmotors und damit zur statischen Schließkraft der Schiebetür proportionale Parameter den zweiten Grenzwert, der niedriger als der erste Grenzwert ist, außerhalb des einen bestimmten Zeitintervalls übersteigt. Eine Blockierung der längsgeführt hin und her bewegbaren Schiebetür kann dann ohne weiteres erkannt werden.

Die Ansteuereinrichtung kann in einfacher Weise als H-Brücke ausgebildet sein, mittels der der Elektromotor genau ansteuerbar ist. Wenn mittels dem Mikrocontrollersystem das Steuersignal als Pulsweitenmodulationssignal an die Ansteuereinrichtung bzw. die H-Brücke anlegbar ist, kann durch die Vorgabe des ersten Grenzwertes als größtmögliches Pulsweitenmodulationssignal sichergestellt werden, dass die in statische Schließkraft der Schiebetür umsetzbare Energieerzeugung des Elektromotors den vorgegebenen ersten Grenzwert keinesfalls überschreitet.

Sofern das Mikrocontrollersystem des weiteren einen A/D-Wandler aufweist, mittels dem ein in einer als Shunt ausgebildeten Strommesseinheit erfasstes Motorstromsignal so bearbeitbar ist, dass es mit dem im Mikrocontrollersystem abgespeicherten ersten und zweiten Grenzwert vergleichbar ist, ist mit geringem Aufwand feststellbar, ob der Motorstrom und damit die Energieerzeugung des Elektromotors sowie die statische Schließkraft der längsgeführt hin und her bewegbaren Schiebetür den ersten oder den zweiten Grenzwert erreicht.

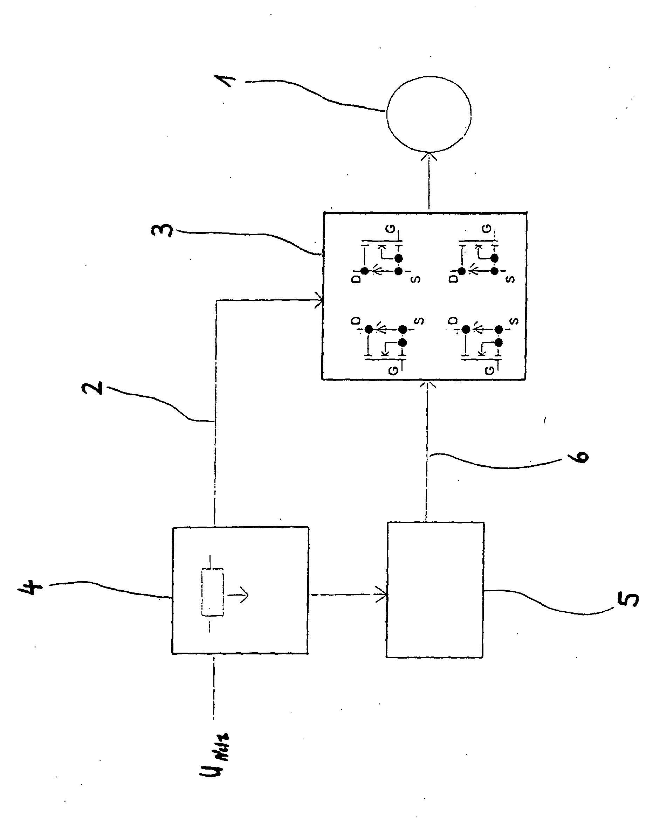

Im folgenden wird die Erfindung an Hand eines Ausführungsbeispiels unter Bezugnahme auf die Zeichnung näher erläutert, in der die erfindungsgemäße Vorrichtung zur Überwachung und Begrenzung der statischen Schließkraft einer längsgeführt hin und her bewegbaren Schiebetür im Prinzip dargestellt ist.

Ein Elektromotor 1 wird durch ein Netz mit der Spannung U-Netz mit elektrischer Energie versorgt. Die elektrische Versorgungsleitung 2 schließt den Elektromotor 1 an die Versorgungsspannung an, wobei in die Versorgungsleitung 2 eine Ansteuereinrichtung in Form einer H-Brücke 3 eingeschaltet ist. Mittels der H-Brücke wird der Elektromotor 1 exakt angesteuert.

Des weiteren ist in der Versorgungsleitung 2 eine Strommesseinheit in Form eines Shunt 4 angeordnet, mittels dem der Motorstrom erfassbar ist.

Der Shunt 4 ist an ein Mikrocontrollersystem 5 angeschlossen und legt ein dem Motorstrom entsprechendes Signal an einen in der Zeichnung nicht dargestellten A/D-Wandler des Mikrocontrollersystems 5 an.

Im Mikrocontrollersystem 5 ist ein erster Grenzwert abgespeichert, welcher der maximal zulässigen statischen Schließkraft der vom Elektromotor 1 angetriebenen längsgeführt hin und her bewegbaren Schiebetür entspricht.

Die Begrenzung der Ansteuereinrichtung 3 des Elektromotors 1 erfolgt mittels des Mikrocontrollersystems 5 über eine Signalleitung 6, über die ein Steuersignal in Form eines Pulsweitenmodulationssignals für den Elektromotor 1 an die Ansteuereinrichtung 3 angelegt wird. Durch dieses Pulsweitenmodulationssignal wird die seitens des Elektromotors 1 erzeugbare Energie auf den ersten Grenzwert beschränkt, welcher der maximal zulässigen statischen Schließkraft der zu bewegenden Schiebetür entspricht.

Das Pulsweitenmodulationssignal setzt sich aus einer elektromotorabhängigen Konstante bei Stillstand der zu bewegenden Schiebetür, die von einem Geschwindigkeitsanteil überlagert wird, zusammen. Bei der Schiebetür einer Aufzuganlage kann dieses Pulsweitenmodulationssignal beispielsweise einem ersten Grenzwert von 150 N entsprechen. Durch das Anlegen des Pulsweitenmodulationssignals an die Ansteuereinrichtung 3 des Elektromotors 1 wird somit zuverlässig vermieden, dass die statische Schließkraft der längsgeführt hin und her bewegbaren Schiebetür den vorgegebenen Grenzwert von 150 N übersteigt.

Des weiteren wird im Mikrocontrollersystem 5 mittels des dort vorgesehenen A/D-Wandlers der Motorstrom erfasst und das entsprechende Signal so bearbeitet, dass es im Mikrocontrollersystem mit einem zweiten Grenzwert verglichen werden kann. Der zweite Grenzwert entspricht einer statischen Schließkraft von ca. 140 N. Erreicht oder übersteigt der Motorstrom ein diesem zweiten Grenzwert entsprechendes Niveau, wird eine Blockiererkennung ausgelöst. Der zweite Grenzwert liegt mit 140 N etwas unterhalb des ersten Grenzwertes, so dass eine Blockierung der zu bewegenden Schiebetür erkennbar ist.

Bei jeder Öffnungsfahrt der Schiebetür wird das Pulsweitenmodulationssignal für ein bestimmtes Zeitintervall erhöht, so dass der zweite Grenzwert überschritten wird. Der in das Mikrocontrollersystem 5 eingelesene Motorstromwert wird während dieses Zeitintervalls erfasst. Danach wird ein niedrigeres Pulsweitenmodulationssignal durch die Signalleitung 6 an die Ansteuereinrichtung 3 angelegt, so dass der Motorstrom während dieses Zeitintervalls den zweiten Grenz- wert unterschreiten muss. Auch dieser Motorstromwert wird während dieses Zeitintervalls erfasst. Sofern die Über- bzw. Unterschreitung des zweiten Grenzwertes durch den Motorstrom der Proportionalität zwischen der Energieerzeugung des Elektromotors 1 und der kinetischen Energie der hin und her bewegbaren Schiebetür entspricht, kann die längsgeführt hin und her bewegbare Schiebetür der Aufzuganlage mit eingestellter Beschleunigungsrampe und Geschwindigkeit geöffnet werden.

Für den Fall, dass ein Fehler vorliegt, wird die H-Brücke 3 abgeschaltet und nach einer Wartezeit wird erneut eine Überprüfung mittels der Strommesseinheit 4 und dem Mikrocontrollersystem 5 durchgeführt.

Durch die vorstehend beschriebene Vorrichtung zur Überwachung und Begrenzung der kinetischen Energie einer längsgeführt hin und her bewegbaren Schiebetür wird die maximale statische Kraft von 150 N in einer der beiden Bewegungsrichtungen der hin und her bewegbaren Schiebetür durch zwei unterschiedlich gestaltete Kontrollmechanismen überwacht.

## Patentansprüche

1. Vorrichtung zur Überwachung und Begrenzung der statischen Schließkraft einer längsgeführt hin und her bewegbaren Schiebetür, mit einem Elektromotor (1), mittels dem die zur Bewegung der Schiebetür erforderliche mechanische Energie erzeugbar ist, einer Ansteuereinrichtung (3), mittels der die vom Elektromotor (1) erzeugte mechanische Energie regelbar ist, und einem Mikrocontrollersystem (5), mittels dem ein zur Energieerzeugung des Elektromotors (1) proportionaler Parameter erfassbar, ein die Energieerzeugung des Elektromotors (1) begrenzendes Steuersignal an die Ansteuereinrichtung (3) anlegbar ist und ein erster Grenzwert, der einer maximal zulässigen statischen Schließkraft der Schiebetür entspricht, für das an die Ansteuereinrichtung (3) anlegbare Steuersignal vorgebbar ist, **dadurch gekennzeich**n e t , dass mittels dem Mikrocontrollersystem (5) ein zweiter Grenzwert, der einer niedrigeren als der maximal zulässigen statischen Schließkraft der Schiebetür entspricht, für das an die Ansteuereinrichtung (3) anlegbare Steuersignal vorgebbar ist, dass mittels dem Mikrocontrollersystem (5) bei jeder Öffnungsfahrt der Schiebetür das an die Ansteuervorrichtung (3) angelegte Steuersignal während eines bestimmten Zeitintervalls erhöh- und während eines anderen bestimmten Zeitintervalls erniedrigbar ist, so dass der zweite Grenzwert für die zulässige statische Schließkraft der Schiebetür während des einen bestimmten Zeitintervalls über- bzw. während des anderen bestimmten Zeitintervalls unterschritten wird, dass mittels dem Mikrocontrollersystem (5) der zur Energieerzeugung des Elektromotors (1) proportionale Parameter während der beiden bestimmten Zeitintervalle erfassbar ist, und dass mittels dem Mikrocontrollersystem (5) überprüfbar ist, ob sich der zur Energieerzeugung des Elektromotors (1) proportionale Parameter während der beiden Zeitintervalle entsprechend der Veränderung des an die Ansteuereinrichtung (3) angelegten Steuersignals verändert.

2. Vorrichtung nach Anspruch 1, bei der mittels des Mikrocontrollersystems (5) eine Blockiererkennung auslösbar ist, wenn der zur Energieerzeugung des Elektromotors (1) und damit zur statischen Schließkraft der Schiebetür proportionale Parameter den zweiten Grenzwert übersteigt.

3. Vorrichtung nach Anspruch 1 oder 2, bei der die Ansteuereinrichtung (3) als H-Brücke ausgebildet ist.

4. Vorrichtung nach einem der Ansprüche 1 bis 3, bei der mittels es Mikrocontrollersystems (5) des Steuersignal als Pulsweitenmodulationssignal an die Ansteuereinrichtung (3) anlegbar ist.

5. Vorrichtung nach einem der Ansprüche 1 bis 4, bei der das Mikrocontrollersystem (5) einen A/D-Wandler aufweist, mittels dem ein in einer als Shunt ausgebildeten Strommesseinheit (4) erfasstes Motorstromsignal so bearbeitbar ist, dass es mit dem im Mikrocontrollersystem (5) abgespeicherten ersten und zweiten Grenzwert vergleichbar ist.

## Claims

1. Device for monitoring and limiting the static closing force of a sliding door which can move to and fro in a longitudinally-guided manner, having an electric motor (1), by means of which the mechanical energy required for moving the sliding door can be generated, a trigger device (3), by means of which the mechanical energy generated by the electric motor (1) can be regulated, and a micro-controller system (5), by means of which a parameter which is proportional to the energy generation of the electric motor (1) can be detected, a control signal which limits the energy generation of the electric motor (1) can be applied to the trigger device (3) and a first limiting value, which corresponds to a maximum permissible static closing force of the sliding door, can be specified for the control signal which can be applied to the trigger device (3), **characterised in that** by means of the micro-controller system (5), a second limiting value, which corresponds to a lower static closing force than the maximum permissible static closing force of the sliding door, can be specified for the control signal which can be applied to the trigger device (3), in that by means of the micro-controller system (5), during each opening journey of the sliding door, the control signal which is applied to the trigger device (3) can be increased during one defined time interval and lowered during another defined time interval, so that the second limiting value for the permissible static closing force of the sliding door is exceeded during the one defined time interval and fallen short of during the other defined time interval, in that by means of the micro-controller system (5), the parameter which is proportional to the energy generation of the electric motor (1) can be detected during the two defined time intervals, and in that by means of the micro-controller system (5), it is possible to check whether the parameter which is proportional to the energy generation of the electric motor (1) changes during the two time intervals in a manner corresponding to the alteration of the control signal applied to the trigger device (3).

2. Device according to claim 1, in which by means of the micro-controller system (5), a blocking recognition can be triggered if the parameter which is proportional to the energy generation of the electric motor (1), and thus to the static closing force of the sliding door, exceeds the second limiting value.

3. Device according to claim 1 or 2, in which the trigger device (3) is constructed as an H-bridge.

4. Device according to one of claims 1 to 3, in which by means of the micro-controller system (5), the control signal can be applied to the trigger device (3) in the form of a pulse-width modulation signal.

5. Device according to one of claims 1 to 4, in which the micro-controller system (5) has an A/D converter, by means of which a motor-current signal detected in a current-measuring unit (4) constructed as a shunt can be processed in such a way that it is comparable to the first and second limiting values stored in the micro-controller system (5).

## Revendications

1. Dispositif de surveillance et de limitation de la force de fermeture statique d'une porte coulissante, pouvant être déplacée en va-et-vient en étant guidée longitudinalement, comportant un moteur (1) électrique, au moyen duquel l'énergie mécanique nécessaire au déplacement de la porte coulissante peut être produite, un dispositif (3) de commande, au moyen duquel l'énergie mécanique produite par le moteur (1) électrique peut être réglée et un système (5) de microcontrôleur, au moyen duquel un paramètre proportionnel à la production d'énergie du moteur (1) électrique peut être détecté, un signal de commande limitant la production d'énergie du moteur (1) électrique peut être appliqué au dispositif (3) de commande et une première valeur limite, qui correspond à une force de fermeture statique admise au maximum de la porte coulissante, peut être prescrite pour le signal de commande pouvant être appliqué au dispositif (3) de commande, **caractérisé en ce qu**'il peut être prescrit au moyen du système (5) de microcontrôleur une deuxième valeur limite, qui correspond à une force plus petite que la force de fermeture statique admise au maximum de la porte coulissante, pour le signal de commande pouvant être appliqué au dispositif (3) de commande, en ce que, au moyen du système (5) de microcontrôleur, à chaque déplacement d'ouverture de la porte coulissante, le signal de commande appliqué au dispositif (3) de commande peut être augmenté pendant un intervalle de temps déterminé et peut être abaissé pendant un autre intervalle de temps déterminé, si bien que l'on est au-dessus de la deuxième valeur limite pour la force de fermeture statique admissible de la porte coulissante pendant le premier intervalle de temps déterminé et que l'ont est au-dessous de cette deuxième valeur limite pendant l'autre intervalle de temps déterminé, en ce qu'il peut être déterminé au moyen du système (5) de microcontrôleur pendant les deux intervalles de temps déterminés, le paramètre proportionnel à la production d'énergie du moteur (1) électrique, et en ce qu'il peut être vérifié par le système (5) de microcontrôleur si le paramètre proportionnel à la production d'énergie du moteur (1) électrique varie pendant le deuxième intervalle de temps en fonction de la variation du signal de commande appliqué au dispositif (3) de commande.

2. Dispositif suivant la revendication 1, dans lequel une reconnaissance de blocage peut être déclenchée au moyen du système (5) de microcontrôleur si le paramètre proportionnel à la production d'énergie du moteur (1) électrique et donc à la force de fermeture statique de la porte coulissante est supérieur à la deuxième valeur limite.

3. Dispositif suivant la revendication 1 ou 2, dans lequel le dispositif (3) de commande est réalisé en pont H.

4. Dispositif suivant l'une des revendications 1 à 3, dans lequel le signal de commande peut être appliqué comme signal de modulation en largeur d'impulsion au dispositif (3) de commande au moyen du système (5) de microcontrôleur.

5. Dispositif suivant l'une des revendications 1 à 4, dans lequel le système (5) de microcontrôleur comprend un convertisseur A/N au moyen duquel un signal de courant du moteur détecté dans une unité (4) de mesure du courant réalisée en shunt peut être traité de manière à pouvoir être comparé à la première et à la deuxième valeurs limites mises en mémoire dans le système (5) de microcontrôleur.
